(19) Europäisches Patentamt
European Patent Office
Office européen des brevets

(11) Veröffentlichungsnummer : **0 093 225**
**B1**

(12) # EUROPÄISCHE PATENTSCHRIFT

(45) Veröffentlichungstag der Patentschrift : **04.05.88**

(51) Int. Cl.⁴ : **H 02 B 13/02**

(21) Anmeldenummer : **83100149.0**

(22) Anmeldetag : **11.01.83**

(54) **Gekapselte, mit einem Isoliergas gefüllte Mittelspannungsschaltanlage.**

(30) Priorität : **23.04.82 DE 3215234**

(43) Veröffentlichungstag der Anmeldung : **09.11.83 Patentblatt 83/45**

(45) Bekanntmachung des Hinweises auf die Patenterteilung : **04.05.88 Patentblatt 88/18**

(84) Benannte Vertragsstaaten : **AT BE CH FR GB IT LI NL SE**

(56) Entgegenhaltungen :
**DE-A- 2 729 571**
**DE-A- 2 733 777**
**FR-A- 1 343 521**
**FR-A- 1 407 080**

(73) Patentinhaber : **Felten & Guilleaume Energietechnik AG**
**Schanzenstrasse 24-30 Postfach 80 50 01**
**D-5000 Köln 80 (DE)**

(72) Erfinder : **Deharde, Horst**
**Stendener Strasse 91**
**D-4152 Kempen 1 (DE)**
Erfinder : **Dirks, Rolf**
**Erlenweg 8**
**D-4151 Willich 4 (DE)**

**EP 0 093 225 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine gekapselte, mit einem Isoliergas gefüllte Mittelspannungsschaltanlage, insbesondere für den Einsatz in Netzverteilerstationen, gemäß dem Oberbegriff des Anspruchs 1.

Die Schaltanlagen der Starkstromtechnik dienen der Aufnahme von Schaltgeräten und zugehörigen Bedienungs-, Schutz- und Überwachungseinrichtungen. Aufgabe der Schaltanlagen ist es, die in den Kraftwerken erzeugte, in den Umspannwerken auf eine höhere oder niedrigere Spannung umgeformte und über Leitungsnetze den Verbraucherstellen zugeführte elektrische Energie zu überwachen, die Anlagenteile ein- und ausschalten zu können und diese bei Störungen vor größeren Schäden zu schützen. Die Schaltanlagen für Mittelspannungsnetze arbeiten etwa im Bereich von 1 bis 30 kV. Seit einiger Zeit kommt es zum Einsatz von Kleinschaltanlagen, die sich durch geringeren Raumbedarf gegenüber den großräumigen luftisolierten Schaltzellen auszeichnen und sich daher vorteilhafterweise in Netzverteilerstationen einsetzen lassen. Hierbei bedient man sich gekapselter Schaltanlagen, deren Vorzug im Schutz gegen Berührung spannungsführender Teile, gegen Verschmutzung, Feuchtigkeit, Eindringen von Kleintieren sowie im geringen Raumbedarf liegt.

Eine gekapselte Mittelspannungsschaltanlage gemäß dem Oberbegriff des Anspruchs 1 ist bereits bekannt (FR-A-1 407 080). Diese Schaltanlage verwendet ein Gehäuse, in welchem zur Unterbrechung von Ringleitungen und einem Transformatorabzweig Schubschalter eingesetzt sind. Diese Schubschalter sind dazu geeignet, die Schaltstellungen « EIN » oder « AUS » einzunehmen. Die Bewegung der Schubschalter verläuft in Achsrichtung der angeschlossenen Kabel bzw. einer Sicherung. Eine in dem Gehäuse befindliche Sammelschiene ruht auf Isolatoren. Die Sammelschiene ist hierbei mehrfach gekröpft, um Aufnahmekontakte für die Schubschalter befestigen zu können. Zu jedem Schubschalter gehört ein gesonderter Messer-Trennschalter, der eine Erdung der zugehörigen Kabel des Ein- und Ausgangs, sowie des Transformatorabzweigs ermöglicht.

Es ist auch eine Mittelspannungs- Kleinschaltanlage bekannt, bei der das Innenteil jeder Durchführung als tragendes Teil für den Schaltmesserdrehpunkt eines Pols eines Trennschalters ausgebildet ist (DE-A-2 733 777). Der Trennschalter arbeitet als Umschalter und ist dreipolig ausgebildet. Er arbeitet mit dazu querliegend angeordneten dreipoligen Lasttrennschaltern, die als Schubschalter ausgebildet sind, zusammen. Ferner ist noch eine Mittelspannungsschaltanlage zu nennen, deren Trennmesserdrehpunkte auf einem Stützer innerhalb des Gehäuses ruhen (FR-A-1 343 521). Die Stromzuführung für das Trennmesser erfolgt über eine Schiene aus einer Nachbarkammer, wobei die Schiene in einer Durchführung gelagert ist.

Eine weitere bekannte Schaltanlage besitzt drei mit Abstand nebeneinander angeordnete Schaltzellen mit je einem geschlossenen Metallgehäuse (DE-A-2 729 571). In jedem dieser Metallgehäuse sind ein Lasttrennschalter mit einer Löscheinrichtung und ein besonderer Erdungsschalter eingesetzt. Die der Zuführung der elektrischen Energie dienenden Sammelschienen sind in einem von den Metallgehäusen getrennten Sammelschienenkasten untergebracht. Das führt dazu, daß zwischen jedem Metallgehäuse und dem Sammelschienenkasten eine besondere Dichtung erforderlich ist. Darüber hinaus sind neben drei gasdichten Durchführungen für den wahlweisen Anschluß eines Dreileiterkabels bzw. von drei Hochspannungssicherungen noch gasdichte Faltenbälge für eine Antriebsstange des Lasttrennschalters und für eine Antriebsstange der Erderwelle vorgesehen.

Der Erfindung liegt nun die Aufgabe zugrunde, eine Mittelspannungsschaltanlage mit dem Ziel zu entwickeln, die wichtigen Teile der Anlage in einem einzigen gekapselten mit einem Minimum von Durchführungen versehenen Gehäuse unterzubringen und dabei die im Inneren des Gehäuses befindlichen Teile so zu gestalten, daß sie in Teilbereichen mehrere Funktionen ausüben können.

Diese Aufgabe wird erfindungsgemäß durch die im kennzeichnenden Teil des Anspruchs 1 angegebenen konstruktiven Maßnahmen gelöst.

Die mit der Erfindung erzielbaren Vorteile bestehen in der Schaffung einer äußerst wartungsarmen Mittelspannungsschaltanlage, die sich aufgrund der konstruktiven Gegebenheiten der einzelnen Teile kostengünstig fertigen läßt. Hierzu trägt besonders bei, daß die Sammelschienen im Gehäuse mit einbezogen sind, die Schaltmesser sich in drei Schaltstellungen bringen lassen und die Drehpunkte der Schaltmesser unter Ausnutzung der Durchführungen keinerlei besondere Stützpunkte benötigen.

Ferner kommt diese Schaltanlage mit nur vier Durchführungen je Schaltfeld aus, was nicht nur die Stabilität der Anlage erhöht, sondern auch die Sicherheit maßgeblich positiv beeinflußt.

Vorteilhafte Ausgestaltungen des Gegenstandes nach Anspruch 1 sind den abhängigen Ansprüchen zu entnehmen.

So erweist es sich als zweckmäßig, das Gehäuse mit einer Rückwand zu versehen, die als umlaufend eingeschweißtes Teil mit einer Sollbruchstelle ausgeführt ist (Anspruch 2). Dies bringt den Vorteil mit sich, daß die Rückwand erst dann eingesetzt wird, wenn alle Prüfungen durchgeführt sind. Die Sollbruchstelle an der Rückseite des Gehäuses, die bei inneren Störungen wirksam werden kann, beschränkt etwaige Schäden auf ein Minimum.

Der Einsatz von Sammelschienen mit einem runden Profil, auf welchem die Doppelmesser der Lasttrennschalter unmittelbar kontaktieren, führt vorteilhafterweise nicht nur zu geringeren Kosten, sondern auch zu einer erheblichen Platzersparnis (Anspruch 6).

Die Ausstattung jedes Schaltmessers mit einer Klappe zur Strömungserzeugung für eine Lichtbogenlöschung bringt den Vorteil mit sich, daß auf eine konventionelle Lichtbogenlöscheinrichtung ganz verzichtet werden kann (Anspruch 7).

Die Sicherungen eines Transformatorenabzweigs setzt man zweckmäßigerweise in einem gesonderten Anbau ein. Dieser Anbau läßt sich vorteilhafterweise an jedes Feld anstatt eines Kabelanschlusses anschrauben. Die Dichtigkeit des Gehäuses gegenüber dem Anbau wird dadurch erreicht, daß der Anbau im Bereich für die Durchführungen nach innen entsprechend der Kontur der Durchführungen gewölbt ist und ein Abschnitt zwischen den Durchführungen und den Auswölbungen mit einer Ringdichtung versehen ist (Anspruch 10).

Der Anbau ist als ein nach vorne offener Isolierstoffkasten ausgebildet, der durch einen nach außen schwenkbaren Metalldeckel verschließbar ist. Dieser Metalldeckel ist so ausgebildet, daß er den Anbau allseitig umgreift (Anspruch 11). Damit sind alle Probleme des Berührungsschutzes auf einfache Weise gelöst.

Der Sicherheit dient ferner, daß die Gegenkontakte für die Sicherungen fest mit dem Anbau und die Sicherungen über Stützelemente fest mit dem Deckel verbunden sind (Anspruch 12). Damit ist gewährleistet, daß beim Ausschwenken des Deckels die Hochspannungssicherungen beidseitig spannungsfrei werden.

Auch ist es für die Sicherheit von Bedeutung, daß der metallene Deckel mit der Schaltwelle in den Trennmesserstellungen « EIN » und « AUS » verriegelt und in der Trennmesserstellung « GEERDET » zum Öffnen freigegeben ist (Anspruch 13).

Der Anbau für die Sicherungen des Transformatorenabzweigs weist zweckmäßigerweise einen Bereich unter dem Gehäuse auf, der mit unterseitiger Einführung zum Anschluß von Kabeln ohne Steckerelemente und zur Auffüllung von Vergußmasse versehen ist (Anspruch 14).

Ausführungsbeispiele der Erfindung sind in mehreren Zeichnungen dargestellt und werden im folgenden näher erläutert. Es zeigen :

Fig. 1 eine Mittelspannungsschaltanlage mit über Steckverbindungen angeschlossenen Kabeln, in Vorderansicht

Fig. 2 in Seitenansicht

Fig. 3 in Draufsicht

Fig. 4 das Gehäuse dieser Mittelspannungsschaltanlage in ausführlicher Darstellung, in Vorderansicht

Fig. 5 in Draufsicht bei abgenommener Oberseite

Fig. 6 diese Mittelspannungsschaltanlage mit direkt angeschlossenen Dreileiterkabeln, in Vorderansicht

Fig. 7 in Seitenansicht

Fig. 8 in Draufsicht

Fig. 9 einen Anbau für Hochspannungssicherungen, in Seitenansicht, teilweise im Schnitt

Fig. 10 diesen Anbau in Rückansicht

Fig. 11 in Vorderansicht

Fig. 12 eine Verbindungsstelle zwischen einer Durchführung und dem Anbau in Seitenansicht.

Nach den Fig. 1, 2 und 3 besteht die Mittelspannungsschaltanlage aus einem Gehäuse 1, das eine vierseitige prismatische Form aufweist und im Querformat angeordnet ist. Die Vorderwand 2 des Gehäuses dient der Aufnahme von Steckern 29, 29', 29". Diese drei Stecker gehören jeweils zu einem Schaltfeld, wobei das vorgesehene Gehäuse für drei Schaltfelder bestimmt ist. Diese Anlage kann bei einer entsprechenden Gestaltung des Gehäuses erweitert werden, so daß auch Anlagen mit mehr als drei Schaltfeldern möglich sind. Eine bevorzugte Ausführungsform der erweiterten Schaltanlage besteht aus sechs Schaltfeldern, was jedoch nur zu einem erweiterten Wirkungsbereich führt. Die Regelausführung für Schaltanlagen, die in Netzverteilerstationen eingesetzt werden, besteht aus einer dreifeldrigen Ausführung, und zwar mit zweimal drei Eingängen und einem Transformatorenabzweig mit drei Hochspannungssicherungen.

Das Gehäuse besitzt eine Rückwand 3, die als umlaufend eingeschweißtes Teil mit einer Sollbruchstelle ausgeführt ist. Die Oberseite 4 des Gehäuses bietet eine Aufnahmemöglichkeit für eine Betätigungsvorrichtung 20 für die Lasttrennschalter. Der Einsatz der Stecker, die mit Kabeln 7, 7', 7" verbunden sind, macht es beim Ziehen der Stecker erforderlich, daß das Gehäuse in einer bestimmten Höhe angeordnet sein muß. Hierzu dient ein Stützrahmen 23, der mit dem Gehäuse fest verbunden ist. Für die Hochspannungssicherungen ist ein Anbau 30 vorgesehen. Mittels eines schwenkbaren Deckels 33 kann dieser Anbau verschlossen werden.

In den Fig. 4 und 5 sind Einzelheiten des Gehäuseinneren dargestellt, wobei in der Fig. 4 ein Teil die Außenansicht der Vorderwand 2 wiedergibt. Es handelt sich wiederum um eine Schaltanlage mit drei Schaltfeldern 5. Die einzelnen Schaltfelder sind im wesentlichen gleich gestaltet, so daß sich die Beschreibung auf ein Schaltfeld beschränken kann. An der Vorderwand des Gehäuses befinden sich je Schaltfeld drei diagonal angeordnete Durchführungen 6, 6' und 6" Die Innenteile 9, 9' und 9" dienen nicht nur der Aufnahme des jeweiligen Leiters, sondern erfüllen auch eine Funktion für die Schaltmesser 10, 10' und 10", indem sie als Stützpunkt für den jeweiligen Schaltmesserdrehpunkt 11, 11' und 11" dienen. Da die Schaltmesserdrehpunkte eines Lasttrennschalters alle in einer Ebene liegen, die Durchführungen und damit die Innenteile diagonal versetzt angeordnet sind, ergibt sich eine etwas unterschiedliche Gestaltung der Verbindung zwischen den Schaltmesserdrehpunkten und den Innenteilen der Durchführungen. An der Innenseite der Rückwand 3 sind Stützer 13 angebracht, die die einzelnen Sammelschienen 12, 12' und 12" aufnehmen. Die Schaltmesser können in drei Schaltstellungen gebracht werden. Hierbei kennzeichnet die Position 14 die Schaltstellung « EIN », die Position 15 die Schaltstellung « AUS » und die Position 16 die Schaltstellung « GEERDET ». Die nichtkontaktierenden Schaltmesserenden 17, 17' und 17" sind über Koppelstangen 18 mit der Schaltwelle 19 verbunden. Die Schaltwelle weist dabei die Besonderheit auf, daß sie einseitig im Inneren des Gehäuses gelagert ist (21), während die andere Seite über eine gasdichte Durchführung 22 nach außen geführt ist.

Die Enden der Schaltmesser, die als Doppelmesser ausgeführt sind, kontaktieren die Sammelschienen beidseitig, wobei zwischen den Messern jeweils eine Zugfeder 24 angeordnet ist. Außerdem sind die Messerenden jeweils mit einer Klappe 25 ausgestattet, die die Aufgabe hat, die notwendige Strömung für eine Lichtbogenlöschung zu erzeugen.

Schließlich ist noch darauf hinzuweisen, daß die Vorderseite in Höhe der Messerenden mit einem Schauglas 37 versehen ist, um den Zustand der Trennstrecke überprüfen zu können.

Nach den Fig. 6, 7 und 8 kann die Schaltanlage auch so gestaltet sein, daß Dreileiterkabel 26 direkt angeschlossen werden können. Hierzu sind Gehäusevorsätze 27 vorgesehen, die den gesamten Bereich zwischen dem jeweiligen Endverschluß 28 und der obersten Anschlußmöglichkeit vollständig abdecken. Eines der Schaltfelder ist wiederum für Hochspannungssicherungen des Transformatorenabzweigs vorgesehen, wozu eine unterseitige Einführung 36 in den Anbau 30 besteht.

Nach der Fig. 9 ist als Anbau 30 ein Isolierstoffkasten vorgesehen, dessen Konturen im Bereich der Durchführungen mit Auswöbungen 31 versehen ist. Anbau und Durchführungen können auf diese Weise in einfacher Weise miteinander verschraubt werden. Zum Erreichen der erforderlichen Dichtheit zwischen Anbau und Durchführungen ist eine Ringdichtung 32 (Fig. 12) eingesetzt.

Zu den Sicherungen 8, 8' und 8" gehören Gegenkontakte 34, die fest mit dem Anbau verbunden sind. Die Sicherungen wiederum sind über Stützelemente 35 fest mit einem Deckel 33 verbunden, der so gestaltet ist, daß er den Anbau allseitig umgreift.

Damit ist ein vollständiger Berührungsschutz gewährleistet. Sobald der Deckel nach außen geschwenkt wird, werden die Sicherungen beidseitig spannungsfrei. Der Anbau weist dann noch die Besonderheit auf, daß er einen Bereich unter dem Gehäuse besitzt, in dem drei Endverschlüsse 28 untergebracht werden können. Diese Endverschlüsse sind einerseits mit einem der Gegenkontakte der Sicherungen verbunden, andererseits stellen sie das Bindeglied zum Transformator dar.

Die Fig. 10 und 11 zeigen Darstellungen des Anbaus in Rück- und Vorderansicht. Hierbei sind die Auswölbungen 31 zur Anpassung an die Durchführungen zu erkennen.

Nach Fig. 12 ist zwischen der Durchführung 6 und der Auswölbung 31 eine Ringdichtung 32 eingesetzt.

**Patentansprüche**

1. Gekapselte, mit einem Isoliergas gefüllte Mittelspannungsschaltanlage, insbesondere für den Einsatz in Netzverteilerstationen, mit mindestens drei Schaltfeldern (5), die jeweils mit einem dreipoligen Lasttrennschalter und einer Erdungsvorrichtung bestückt sind, mit Durchführungen (6, 6', 6") für den Anschluß von Ringleitungskabeln (7, 7', 7" bzw. 26) und von Sicherungen (8, 8', 8") eines Transformatorenabzweigs, sowie mit Sammelschienen (12, 12', 12") für die Phasen $L_1$, $L_2$ und $L_3$, mit einem gemeinsamen Gehäuse (1), das die Schaltfelder (5) gasdicht einschließt, wobei je Schaltfeld drei Durchführungen (6, 6', 6") für den wahlweisen Anschluß von Kabeln (7, 7', 7") oder Sicherungen (8, 8', 8") eingesetzt sind, dadurch gekennzeichnet, daß das Innenteil (9, 9', 9") jeder Durchführung (6, 6', 6") in an sich bekannter Weise als tragendes Teil für den Schaltmesserdrehpunkt (11, 11', 11") eines Pols eines Lasttrennschalters ausgebildet ist, daß ein Schaltmesser (10, 10', 10") jeweils die auf Stützern (13) im Inneren des Gehäuses (1) ruhende Sammelschiene (12, 12', 12") unmittelbar kontaktiert und mittels einer Schaltwelle (19) jeweils in die Stellungen « EIN » (14), « AUS » (15) und « GEERDET » (16) schaltbar ist, und daß die Schaltwelle (19) eines dreipoligen Lasttrennschalters einseitig im Inneren des Gehäuses (1) gelagert (21) und die andere Seite gasdicht nach außen geführt (22) ist.

2. Mittelspannungsschaltanlage nach Anspruch 1, dadurch gekennzeichnet, daß das Gehäuse (1) als vierseitiger prismatischer Körper ausgebildet ist, dessen Länge nach der Anzahl der Schaltfelder (5) bemessen ist, daß die Wände des Gehäuses (1) miteinaner dicht verschweißt sind, wobei die Rückwand (3) als umlaufend eingeschweißtes Teil mit einer Sollbruchstelle ausgeführt ist, und daß das gesamte Gehäuse auf einem Stützrahmen (23) aufgesetzt ist.

3. Mittelspannungsschaltanlage nach einem der Ansprüche 1 oder 2, dadurch gekennzeichnet, daß die Durchführungen (6, 6', 6") für den Anschluß von Kabeln (7, 7', 7") oder Sicherungen (8, 8', 8") eines Transformatorenabzweigs in der Vorderwand (2) des Gehäuses (1) diagonal eingesetzt sind, daß die Achsen der Schaltmesserdrehpunkte (11, 11', 11") parallel zur Vorderwand angeordnet sind, wobei die nichtkontaktierenden Messerenden (17, 17', 17") über Koppelstangen (18, 18', 18") mit der ebenfalls parallel zur Vorderwand angeordneten Schaltwelle (19) verbunden sind, die an der Oberseite (4) des Gehäuses gasdicht nach außen geführt ist.

4. Mittelspannungsschaltanlage nach einem der Ansprüche 1 bis 3, dadurch gekennzeichnet, daß eine Betätigungseinrichtung (20) für jeden Lasttrennschalter auf der Oberseite (4) des Gehäuses (1) fest mit der nach außen geführten Schaltwelle (19) verbunden ist.

5. Mittelspannungsschaltanlage nach einem der Ansprüche 1 bis 3, dadurch gekennzeichnet, daß die Betätigungseinrichtung (20) als transportable Einheit ausgebildet ist, die je nach Anwendungsfall auf die Schaltwelle (19) aufsteckbar ist.

6. Mittelspannungsschaltanlage nach einem der Ansprüche 1 und 3, dadurch gekennzeichnet, daß jedes Schaltmesser (10, 10', 10") als Doppelmesser ausgebildet ist, das die mit einem runden Profil versehene zugehörige Sammelschiene (12, 12', 12") beidseitig kontaktiert, wobei zwischen den Messern eine Zugfeder (24) angeordnet ist.

7. Mittelspannungsschaltanlage nach einem der Ansprüche 1, 3 oder 6, dadurch gekennzeichnet, daß jedes Schaltmesser (10, 10', 10") mit einer Klappe (25) zur Strömungserzeugung für eine Lichtbogenlöschung versehen ist.

8. Mittelspannungsschaltanlage nach einem der Ansprüche 1 bis 7, dadurch gekennzeichnet, daß das Gehäuse (1) bei Anschluß von Dreileiterkabeln (26) mit einem Gehäusevorsatz (27) abgedeckt ist, in dessen Bodenteil der zugehörige Endverschluß (28) eingesetzt ist.

9. Mittelspannungsschaltanlage nach einem der Ansprüche 1 bis 7, dadurch gekennzeichnet, daß einpolige, vollisolierte Stecker (29, 29', 29") beim Einsatz von einphasigen Kabeln (7, 7', 7") vorgesehen sind, die mit den Durchführungen (6, 6', 6") im Gehäuse (1) korrespondierend ausgebildet sind.

10. Mittelspannungsschaltanlage nach einem der Ansprüche 1 bis 9, dadurch gekennzeichnet, daß die Sicherungen (8, 8', 8") eines Transformatorenabzweigs in einem gesonderten Anbau (30) eingesetzt sind, der auf die Durchführungen (6, 6', 6") des Gehäuses (1) aufgeschraubt ist, wobei der Bereich für die Durchführungen nach innen entsprechend der Kontur der Durchführungen gewölbt (31) ist und ein Abschnitt zwischen den Durchführungen und den Auswölbungen mit einer Ringdichtung (32) versehen ist.

11. Mittelspannungsschaltanlage nach Anspruch 10, dadurch gekennzeichnet, daß der Anbau (30) als nach vorne offener Isolierstoffkasten ausgebildet ist, der von einem nach außen schwenkbaren Deckel (33) aus Metall derart verschließbar ist, daß er den Isolierstoffkasten in geschlossenem Zustand allseitig umgreift.

12. Mittelspannungsschaltanlage nach einem der Ansprüche 10 bis 11, dadurch gekennzeichnet, daß die Gegenkontakte (34) für die Sicherungen (8, 8', 8") fest mit dem Anbau (30) und die Sicherungen über Stützelemente (35) fest mit dem Deckel (33) verbunden sind.

13. Mittelspannungsschaltanlage nach einem der Ansprüche 1 bis 12, dadurch gekennzeichnet, daß der metallene Deckel (33) mit der Schaltwelle (19) in den Trennmesserstellungen « EIN » (14) und « AUS » (15) verriegelt und in der Trennmesserstellung « GEERDET » (16) zum Öffnen freigegeben ist.

14. Mittelspannungsschaltanlage nach einem der Ansprüche 10 bis 13, dadurch gekennzeichnet, daß der Anbau (30) einen Bereich unter dem Gehäuse (1) aufweist, der mit unterseitiger Einführung (36) zum Anschluß von Kabeln ohne Steckelemente und zur Auffüllung von Vergußmasse versehen ist.

**Claims**

1. Medium voltage gas-insulated metal-clad switchgear, more particularly for use in mains switching stations, with at least three switchgear panels (5), which are respectively provided with a three-pole load-disconnecting switch and an earthing device, with ducts (6, 6', 6") for connecting ring main cables (7, 7', 7" or 26) and fuses (8, 8', 8") of a transformer tap, and with bus bars (12, 12', 12") for phases $L_1$, $L_2$ and $L_3$, with a common housing (1) which encloses the switchgear panels (5) in gastight manner, three ducts (6, 6', 6") being used for each switchgear panel for the selective connection of cables (7, 7', 7") or fuses (8, 8', 8"), characterised in that the inner part (9, 9', 9") of each duct (6, 6', 6") is designed in a manner known per se as a bearing portion element for the fulcrum (11, 11', 11") of the switch blade of a pole of a load-break switch, that a switch blade (10, 10', 10") makes direct contact with the respective bus bar (12, 12', 12") resting on the supporting insulator (13) inside the housing and is switchable by means of an control shaft (19) to the positions « ON » (14), « OFF » (15) and « EARTHED » (16), and that the control shaft (19) of a three-pole load-disconnecting switch is disposed inside the housing (21) on one side and the other side (22) is guided outwards in a gastight manner.

2. Medium-voltage switchgear according to claim 1, characterised in that the housing (1) is designed as a four-sided prism, the length of which is dimensioned according to the number of switchgear panels (5), that the walls of the housing (1) are welded together so as to be leakproof, the rear wall (3) being formed as a continuously welded part with a predetermined breaking point, and that the entire housing is mounted on a support frame.

3. Medium-voltage switchgear according to claim 1 or 2, characterised in that the ducts (6, 6', 6") for connecting cables (7, 7', 7") or fuses (8, 8', 8") of a transformer tap in the front wall (2) of the housing (1) are inserted diagonally, that the axes of the point fulcrum (11, 11', 11") of the switch blade are arranged parallel to the front wall, the non-contactmaking blade ends (17, 17', 17") being connected via coupling rods (18, 18', 18") to the control shaft (19), which is likewise arranged so as to be parallel to the front wall and guided outwards on the upper side (4) of the housing so as to be gastight.

4. Medium-voltage switchgear according to any one of claims 1 to 3, characterised in that an actuating device (20) for each load-disconnecting switch is rigidly connected on the upper side (4) of the housing (1) to the outwardly guided interrupter shaft (19).

5. Medium-voltage switchgear according to any one of claims 1 to 3, characterised in that the actuating device (20) is designed as a transportable unit, which can be mounted on the control shaft (19) according to application.

6. Medium-voltage switchgear according to either of claims 1 and 3, characterised in that each switch blade (10, 10', 10") is designed as a double blade, which makes contact on both sides with the associated bus bar (12, 12', 12") provided with a round profile, a tension spring (24) being disposed between the blades.

7. Medium-voltage switchgear according to any one of claims 1, 3 or 6, characterised in that each switch blade (10, 10', 10") is provided with a shutter (25) for generating current for extinguishing an electric arc.

8. Medium-voltage switchgear according to any one of claims 1 to 3, characterised in that when triple core cables are connected, the housing (1) is covered by a housing attachment (27), in the base of which the associated end connector (28) is inserted.

9. Medium-voltage switchgear according to any one of claims 1 to 7, characterised in that single pole fully insulated plugs (29, 29', 29") are provided when single phase cables (7, 7', 7") are used, which are designed so as to correspond to the ducts (6, 6', 6") in the housing (1).

10. Medium-voltage switchgear according to any one of claims 1 to 9, characterised in that the fuses (8, 8', 8") of a transformer tap are inserted in a special attachment (30), which is screwed onto the ducts (6, 6', 6") of the housing (1), the region for the guides being curved inwards (31) corresponding to the contour of the ducts and a section being provided between the ducts and the curved portions with an annular seal (32).

11. Medium-voltage switchgear according to claim 10, characterised in that the attachment (30) is designed as an insulation material case open at the front, which can be sealed by an outwardly pivotable metal cover (33) in such a way that the said cover surrounds the insulation material case on all sides when closed.

12. Medium-voltage switchgear according to either of claims 10 to 11, characterised in that the cooperating contacts (34) for the fuses (8, 8', 8") are rigidly connected to the attachment (30) and the fuses are rigidly connected to the cover (33) via support elements (35).

13. Medium-voltage switchgear according to any one of claims 1 to 12, characterised in that the metal cover (33) is locked with the control shaft (19) in the contact positions « ON » (14) and « OFF » (15) and is released to open in the knife contact position « "EARTHED » (16).

14. Medium-voltage switchgear according to any one of claims 10 to 13, characterised in that the attachment (30) has a region beneath the housing (1), which is provided with an underside lead-in (36) for connecting cables without plug elements and for filling with sealing compound.

**Revendications**

1. Installation de communication en moyenne tension, blindée, à isolation par gaz, notamment destinée à des postes de répartition d'un réseau électrique, comportant au moins trois panneaux de couplage (5) qui sont respectivement garnis d'un commutateur de charge tripolaire et d'un dispositif de mise à la masse, avec des passages (6, 6', 6") pour le raccordement de câbles de conduites annulaires (7, 7', 7" ou 26) et de fusibles (8, 8', 8") d'une dérivation de transformateur ainsi que des rails électriques (12, 12', 12") pour les phases ($L_1$, $L_2$, $L_3$), comportant un boîtier commun (1) qui entoure les panneaux de couplage (5) de manière étanche au gaz, chaque panneau de couplage étant muni de trois passages (6, 6', 6") pour le raccordement sélectif de câbles (7, 7', 7") ou de fusibles (8, 8', 8"), caractérisée en ce que la partie intérieure (9, 9', 9") de chaque passage (6, 6', 6") est réalisée de manière connue en soi comme partie de support pour le point d'articulation des couteaux de commutation (11, 11', 11") d'un pôle d'un commutateur de coupure en charge, en ce qu'un couteau de commutateur (10, 10', 10") peut, respectivement, être mis en contact avec les rails conducteurs (12, 12', 12") s'appuyant à l'intérieur du boîtier (1) sur des appuis (13) et d'être commuté par l'intermédiaire d'un axe de commutation (19) respectivement dans l'une des positions « BRANCHEMENT » (14) « COUPURE » (15) et « MISE A LA MASSE » (16) et en ce que l'axe de commutation (19) d'un commutateur de coupure en charge, tripolaire, est monté (21) d'une part à l'intérieur du boîtier (1) et l'autre côté en sort (22) de manière étanche au gaz.

2. Installation de commutation en moyenne tension, selon la revendication 1, caractérisée en ce que le boîtier (1) est une pièce prismatique à quatre côtés dont la longueur dépend du nombre de panneaux de couplage (5), les parois du boîtier (1) étant soudées de manière étanche l'une à l'autre et la paroi arrière (3) est une pièce soudée périphérique avec un point de rupture de consigne et en ce que l'ensemble du boîtier s'appuie sur un châssis (23).

3. Installation de commutation en moyenne tension, selon l'une quelconque des revendications 1 et 2, caractérisée en ce que les passages (6, 6', 6") pour le raccordement des câbles (7, 7', 7") ou des fusibles (8, 8', 8") d'une branche de transformateur, sont prévus sur la paroi avant (2) du boîtier (1), en diagonale, l'axe des points d'articulation (11, 11', 11") des couteaux étant parallèle à la paroi avant et les extrémités (17, 17', 17") des couteaux qui n'établissent pas le contact sont reliées par des barres de couplage (18, 18', 18") à l'arbre de commutation (19) également parallèle à la paroi avant, axe qui sort de manière étanche au gaz par le côté supérieur (4) du boîtier.

4. Installation de commutation en moyenne tension selon l'une quelconque des revendications 1 à 3, caractérisée par un dispositif de manœuvre (20) pour chaque commutateur de coupure en charge, relié solidairement à la partie supérieure (4) du boîtier (1) à un axe de commutation (19) sortant à l'extérieur du boîtier.

5. Installation de commutation en moyenne tension selon l'une quelconque des revendications 1 à 3, caractérisée en ce que l'installation de manœuvre (20) est une unité transportable qui peut s'enficher suivant l'utilisation sur l'axe de commutation.

6. Installation de commutation en moyenne tension selon l'une quelconque des revendications 1 et 3, caractérisée en ce que chaque couteau de commutation (10, 10', 10") est en forme de double couteau venant en contact sur les deux côtés du rail conducteur (12, 12', 12") à profil rond, un ressort de traction (24) étant prévu entre les couteaux.

7. Installation de commutation en moyenne tension selon l'une quelconque des revendications 1, 3 ou 6, caractérisée en ce que chaque couteau de commutation (10, 10', 10") est muni d'un capuchon (25) pour engendrer un courant destiné à éteindre l'arc électrique.

8. Installation de commutation en moyenne tension, selon l'une quelconque des revendications 1 à 7, caractérisée en ce que le boîtier (1) est recouvert par un prolongement de boîtier (27) dans le cas du raccordement de câble à trois conducteurs (26), prolongement dont le fond comporte le branchement d'extrémité (28) correspondant.

9. Installation de commutation en moyenne tension, selon l'une quelconque des revendications 1 à 7, caractérisée par des fiches (29, 29', 29") monopolaires à isolation complète dans le cas de l'utilisation de câbles monopolaires (7, 7', 7"), qui sont réalisées de manière à correspondre aux passages (6, 6', 6") dans le boîtier (1).

10. Installation de commutation en moyenne tension, selon l'une quelconque des revendications 1 à 9, caractérisée en ce que les fusibles (8, 8', 8") d'une branche de dérivation de transformateur sont logés dans une partie rapportée (30) particulière qui est vissée sur les passages (6, 6', 6") du boîtier (1) et la zone correspondant aux passages est bombée vers l'intérieur en fonction du contour des organes de passage (31) et un segment entre les passages et les parties bombées est muni d'un joint annulaire (32).

11. Installation de commutation en moyenne tension selon la revendication 10, caractérisée en ce que la partie rapportée (30) est réalisée comme un caisson isolé dont l'avant est ouvert et qui est susceptible d'être fermé par un couvercle (30) basculant vers l'extérieur, couvercle en métal, de façon à entourer, de tous côtés, le caisson isolé, lorsqu'il est fermé.

12. Installation de commutation en moyenne tension selon l'une quelconque des revendications 10 à 11, caractérisée en ce que les contre-contacts (34) pour les fusibles (8, 8', 8") sont reliés solidairement à la partie rapportée (30) et les fusibles sont reliés solidairement au couvercle (33) par l'intermédiaire d'éléments d'appui (35).

13. Installation de commutation en moyenne tension, selon l'une quelconque des revendications 1 à 12, caractérisée en ce que le couvercle métallique (33) est verrouillé à l'axe de commutation (19) pour les positions des couteaux de coupure « BRANCHEMENT » (14) et « COUPURE » (15), le couvercle étant libéré à l'ouverture pour la position « MISE A LA MASSE » (16) des couteaux.

14. Installation de commutation en moyenne tension, selon l'une quelconque des revendications 10 à 13, caractérisée en ce que la partie rapportée (30) comporte une zone située sous le boîtier (1) qui est munie avec une entrée (36) par le bas pour le branchement de câbles sans élément d'enfichage et pour le remplissage de la masse de coulée.

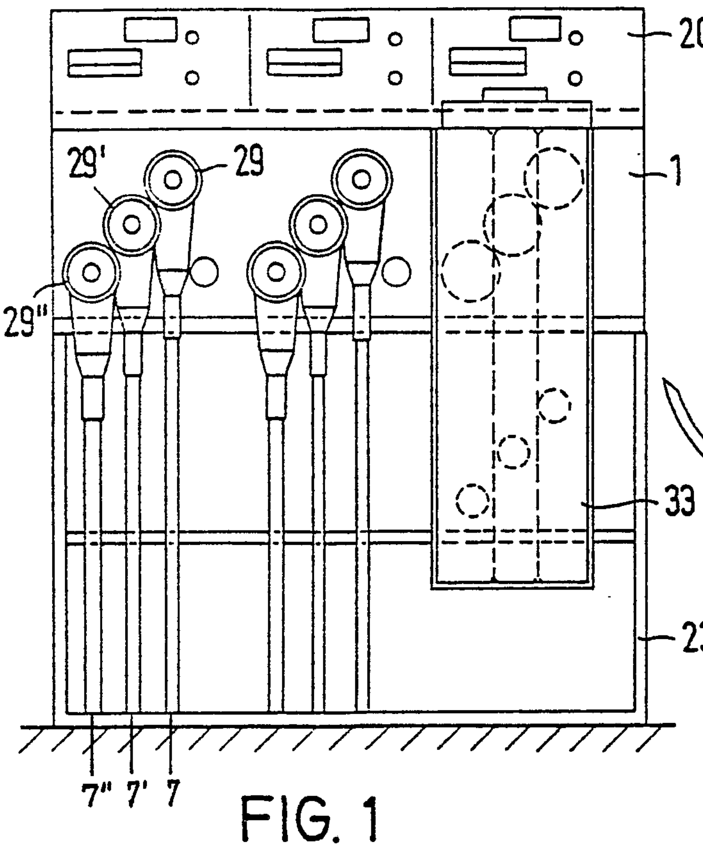


FIG. 1

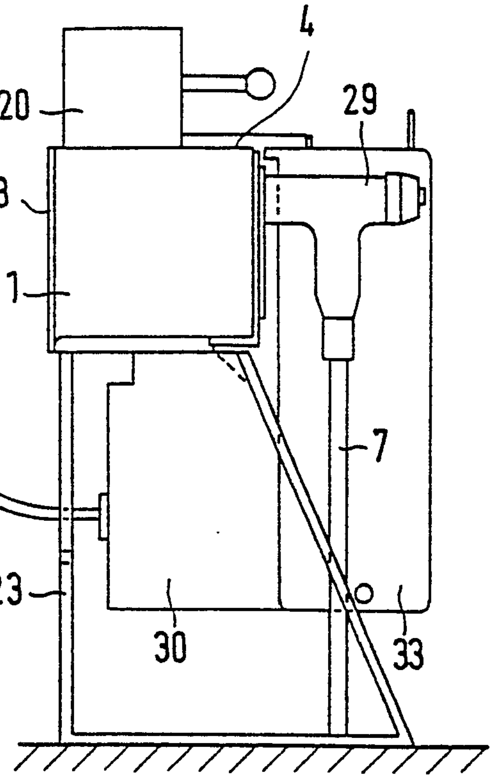


FIG. 2

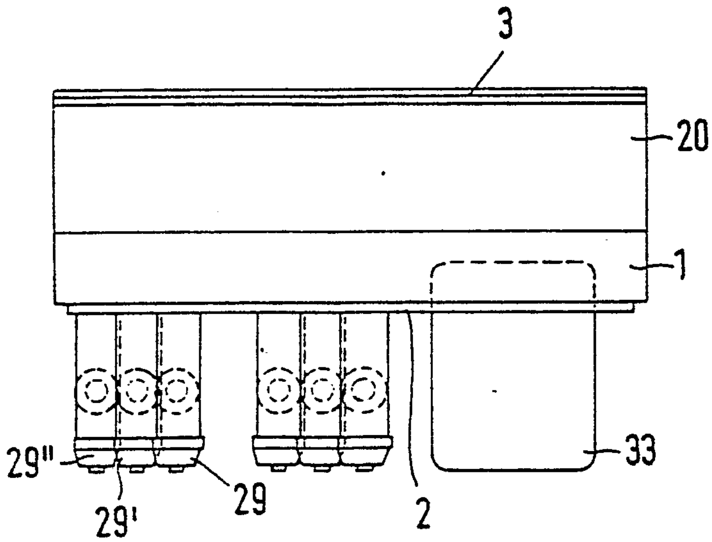


FIG. 3

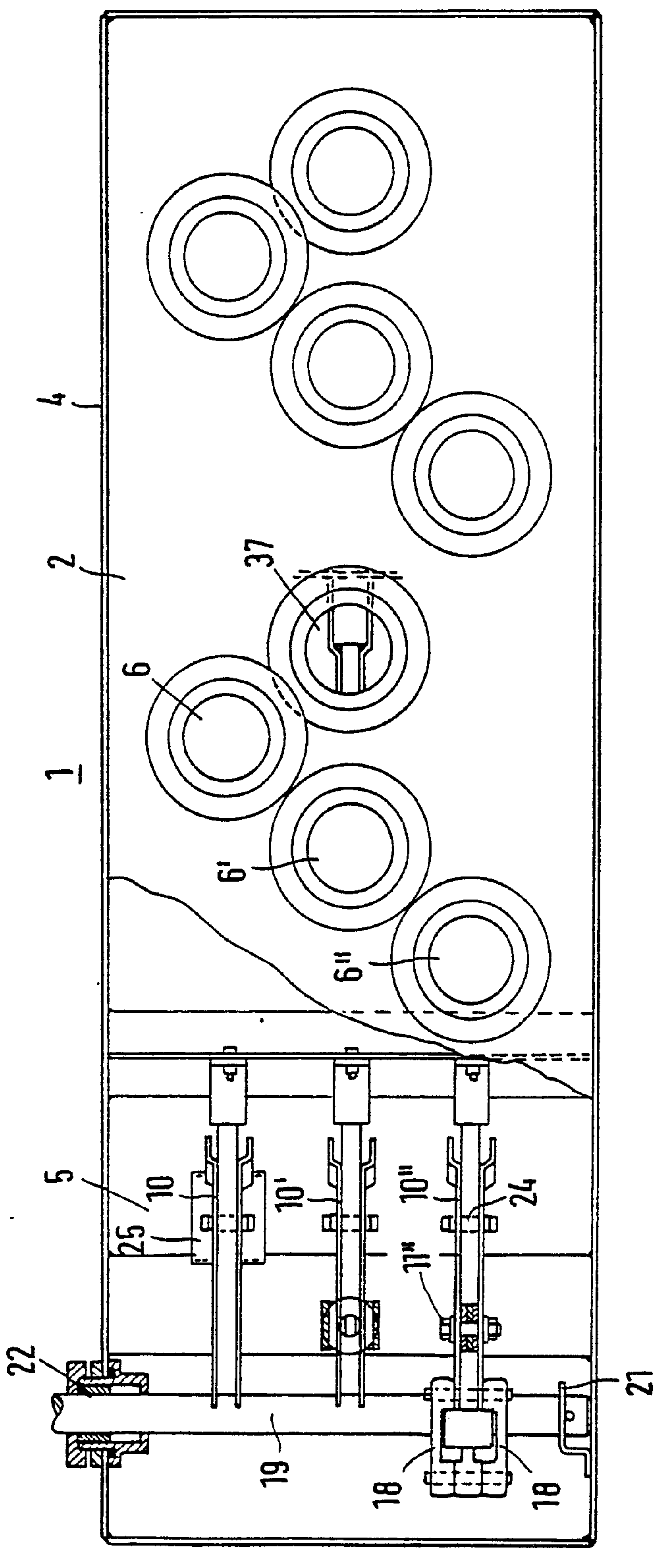


FIG. 4

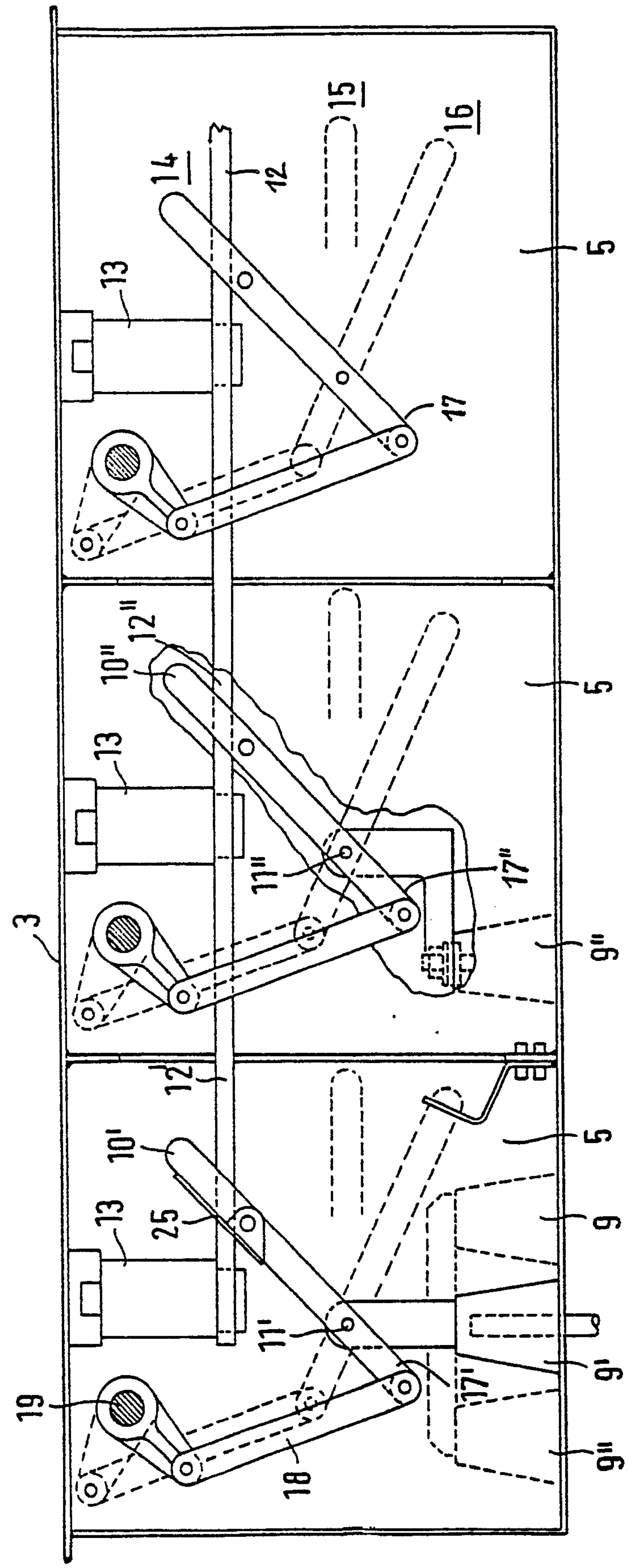


FIG. 5

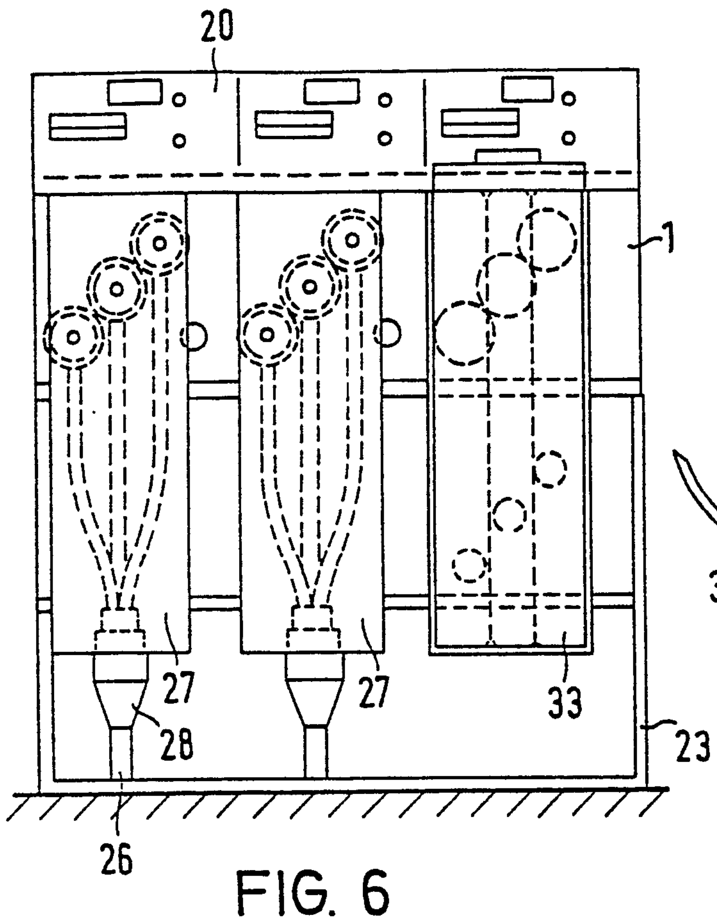


FIG. 6

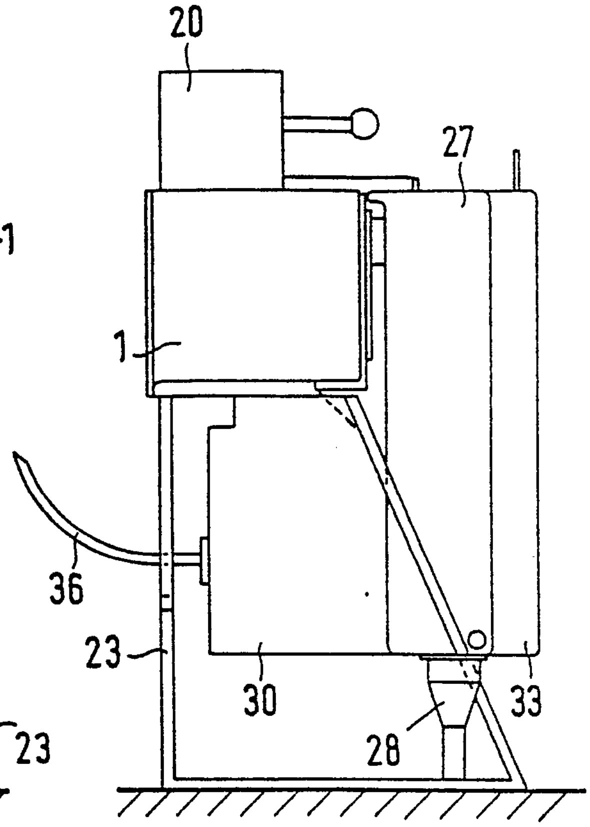


FIG. 7

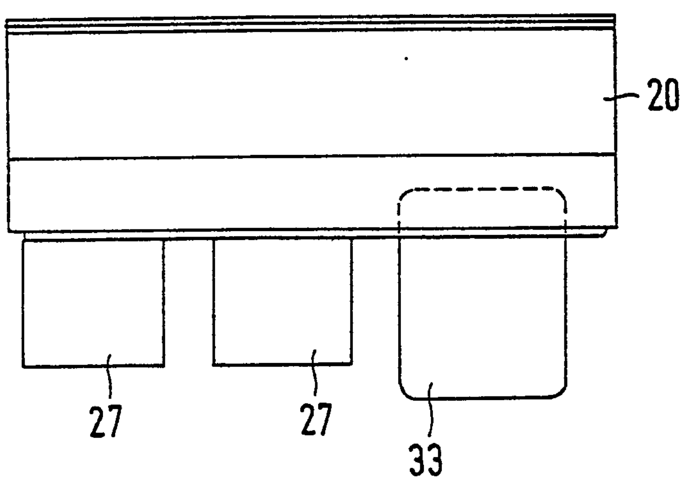


FIG. 8

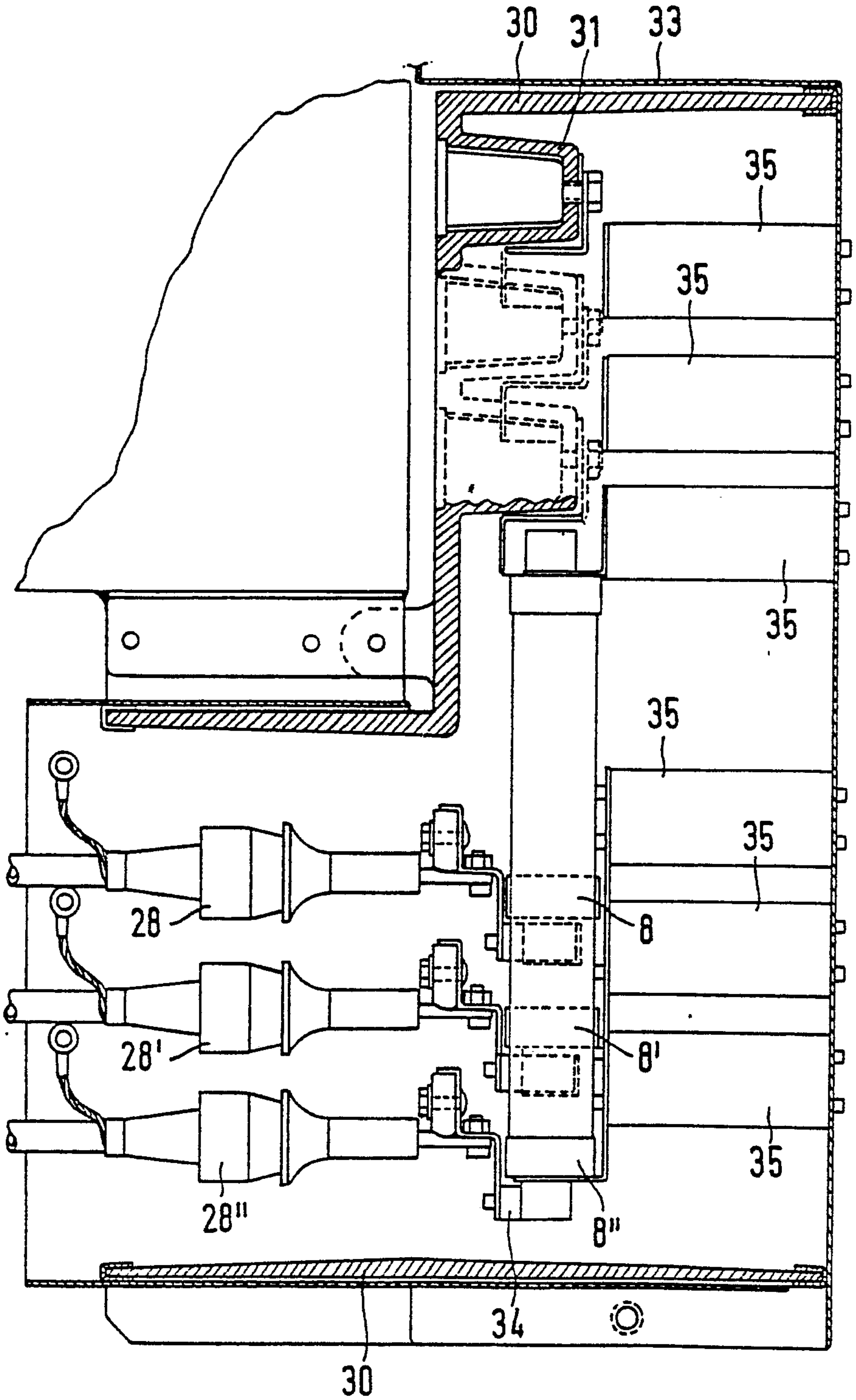


FIG. 9

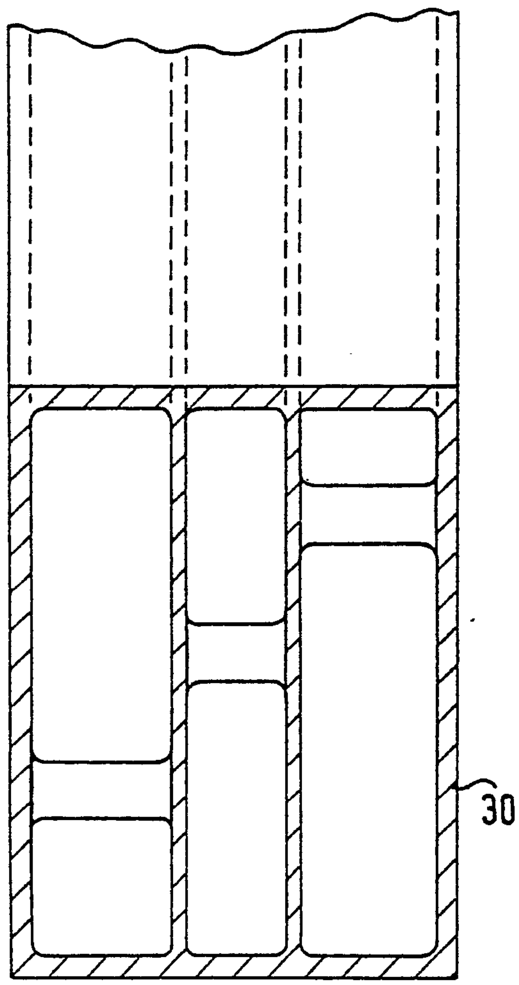


FIG. 10

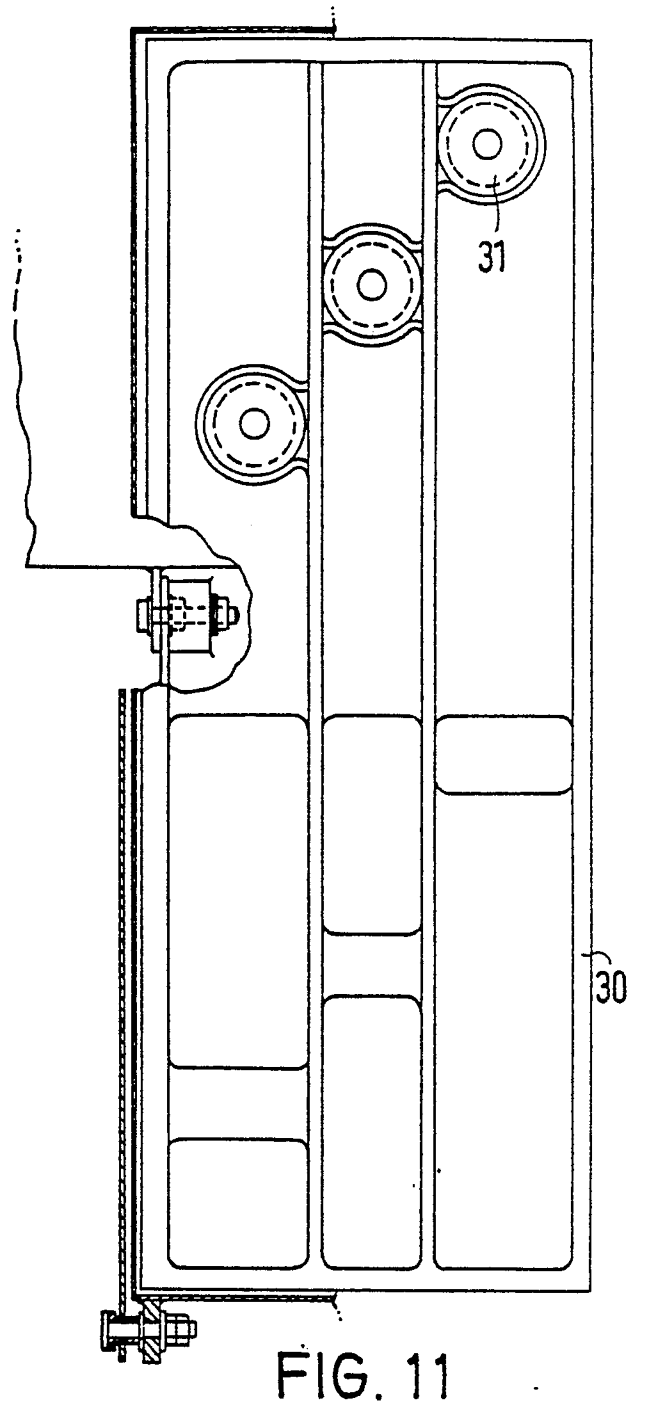


FIG. 11

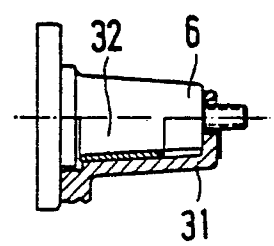


FIG. 12